Europäisches Patentamt

European Patent Office

Office européen des brevets

(19)

(11) **EP 0 408 959 B1**

(12) **EUROPÄISCHE PATENTSCHRIFT**

(45) Veröffentlichungstag und Bekanntmachung des Hinweises auf die Patenterteilung:
01.05.1996 Patentblatt 1996/18

(51) Int Cl.⁶: **G01N 27/404**

(21) Anmeldenummer: 90112544.3

(22) Anmeldetag: 02.07.1990

(54) **Elektrochemische Messzelle zum Nachweis von Blausäure oder Schwefeldioxid**

Electrochemical measuring cell for the detection of prussic acid or sulphur dioxide

Cellule de mesure électrochimique pour la détection de l'acide prussique ou de l'anhydride sulfureux

(84) Benannte Vertragsstaaten:
DE FR GB NL

(30) Priorität: 18.07.1989 DE 3923717

(43) Veröffentlichungstag der Anmeldung:
23.01.1991 Patentblatt 1991/04

(73) Patentinhaber: DRÄGERWERK AKTIENGESELLSCHAFT
D-23542 Lübeck (DE)

(72) Erfinder:
• Kühn, Uwe
  D-2067 Wesenberg (DE)
• Kiesele, Herbert, Dr.
  D-2400 Lübeck (DE)
• Haupt, Stephan, Dr.
  D-2400 Lübeck (DE)

(56) Entgegenhaltungen:
EP-A- 0 059 841          EP-A- 0 293 230
US-A- 3 795 589

• SOVIET INVENTIONS WEEKLY, Section Electrical, Week 8927, 16 August 1989 Derwent Publikations Ltd., LONDON, GB & SU-A-1434353
• ANALYTICAL CHEMISTRY. vol. 59, no. 4, Februar 1987, COLUMBUS US Seiten 666 - 670; A. RIOS et al: "Electrochemical determination of sulfur dioxide in air samples in a closed-loop flow injection system"
• JOURNAL OF THE ELECTROCHEMICAL SOCIETY. vol. 136, no. 1, Januar 1989, MANCHESTER, NEW HAMPSHIRE, US Seiten 101 - 108; A. KATAGIRI et al: "Kinetics of the electro-oxidation of sulfite catalyzed by copper ion"
• INORGANIC CHEMISTRY. vol. 20, no. 12, Dezember 81, EASTON US Seiten 4143 - 4147; A. KATAGIRI et al: "Formation constant of the tetracyanocuprate(II) ion and the mechanism of its decomposition"

EP 0 408 959 B1

**Beschreibung**

Die Erfindung betrifft eine elektrochemische Meßzelle zum Nachweis von Blausäure oder Schwefeldioxid mittels mindestens einer Meßelektrode und einer Gegenelektrode, die in einer Meßkammer aufgenommen sind, welche zur Umgebung hin mit einer für die nachzuweisende Substanz permeablen Membran abgeschlossen ist und welche mit einem Elektrolyten gefüllt ist, der einen die Oxidation der nachzuweisenden Substanz katalysierenden Zusatz an Kupfersalzen enthält.

Aus der US 3,795,589 ist eine elektrochemische Meßzelle zum Nachweis von Schwefeldioxid bekannt, bei welcher die Meßelektrode in Kontakt mit einer dünnen Elektrolytschicht auf einer für die nachzuweisende Komponente permeablen Membran ist und die Gegenelektrode von dem gleichen Elektrolyten umgeben ist. Der Elektrolyt enthält ein Kupfersalz, welches mit der nachzuweisenden Komponente eine Redoxreaktion eingeht. Nachteilig bei der bekannten Meßzelle ist, daß beim Nachweis von Schwefeldioxid eine hohe Querempfindlichkeit gegenüber Wasserstoff vorhanden ist.

Eine Meßzelle für Blausäure als Substanz ist aus der DE-OS 26 27 271 bekanntgeworden.

Bei der bekannten Meßanordnung wird eine Ag/Ag$^+$ Meßelektrode verwendet, an welcher jedoch HCN unter Komplexbildung mit den in Lösung befindlichen Ag$^+$-Ionen reagiert (Gleichungen 1) und 2)):

1) $HCN = H^+ + CN^-$
2) $Ag^+ + 2 CN^- = Ag(CN)_2^-$
3) $Ag = Ag^+ + e^-$.

Hierdurch wird das elektrochemische Gleichgewicht gestört und die Meßelektrode liefert unter partieller Auflösung solange Ag$^+$ nach, bis das Gleichgewicht wieder hergestellt ist (Gleichung 3)). Dies hat über eine längere Zeit gesehen störende Elektrodenkorrosion zur Folge, welche die Langzeitstabilität des Meßsignals beeinflußt und zu unerwünschtem Driftverhalten der Meßzelle führt.

Bei der bekannten Meßzelle wird daher Blausäure in der Weise nachgewiesen, daß das gebildete Cyanid mit den gelösten Silberionen einen Komplex bildet und somit das Elektrodengleichgewicht stört, so daß die Elektrode Ag$^+$ nachliefern muß und folglich korrodiert.

Der vorliegenden Erfindung liegt die Aufgabe zugrunde, eine Meßzelle der genannten Art so zu verbessern, daß die Korrosion des Elektrodenmaterials vermieden, die Langzeitstabilität des Meßsignals erhöht und die Querempfindlichkeit gegenüber Wasserstoff reduziert wird.

Die Lösung der Aufgabe erfolgt dadurch, daß die Meßelektrode und Gegenelektrode aus Gold gefertigt sind, um eine große Korrosionsbeständigkeit der Elektroden in bezug auf den Elektrolyten zu erhalten und um die Querempfindlichkeit auf Wasserstoff zu reduzieren.

Der Kupferkatalysator ermöglicht die direkte anodische Oxidation des Cyanids zu Dicyan, ohne daß die Elektrode an diesem chemischen Reaktionsmechanismus beteiligt wird, so daß die Auflösung des Elektrodenmaterials verhindert ist. Durch den Kupferzusatz läuft die Nachweisreaktion als Oxidation nur unter Beteiligung des gelösten Kupfers mit HCN in der Lösung ab, wobei die eigentliche Meß- oder Arbeitselektrode nur noch den elektrischen Kontakt zur Elektrolytlösung herstellt und somit den Kupferkatalysator regeneriert. Auf diese Weise ist gewissermaßen eine flüssige Elektrode für die Reaktion der Blausäure geschaffen worden. Der Reaktionsablauf kann gemäß folgenden Einzelschritten dargestellt werden:

vorgelagertes Gleichgewicht

$$HCN = H^+ + CN^-$$

Startreaktion

$$2 Cu^{2+} + 6 CN^- = Cu(CN)_6^{2-}$$

$$Cu_2(CN)_6^{2-} = 2 Cu(CN)_2^- + (CN)_2$$

Kettenreaktion

$$2 Cu(CN)_2^- + 2 CN^- = Cu_2(CN)_6^{4-}$$

$$Cu_2(CN)_6^{4-} = Cu_2(CN)_6^{2-} + 2e^-$$

$$Cu_2(CN)_6^{2-} = 2 Cu(CN)_2^- + (CN)_2$$

$$2 HCN = (CN)_2 + 2e^- + 2H^+$$

**als Bilanz der Kettenreaktion.**

Aus der an sich bekannten Reaktionskette (Katagiri et al, Inorg. Chem. 20, (1981) 4143-4147) ist ersichtlich, daß Cyanid zu Dicyan unter Beteiligung des Kupfersalzes als Katalysator oxidiert wird, ohne daß ein Elektrodenbestandteil dazu benötigt würde. Dabei wird pro umgesetztes Cyanid ein Elektron freigesetzt. Eine Komplexbildung zwischen Blausäure und einem Elektrodenbestandteil findet nicht statt, da die Nachweisreaktion vollständig in der Elektrolytlösung abläuft.

Einen analogen Sachverhalt findet man bei dem Nachweis von Schwefeldioxid, wobei lediglich statt des Cyanids ein Sulfit ($SO_3^{2-}$) vorliegt. Eine entsprechende Reaktionskette findet sich in Katagiri et al, J. Elektrochem. Soc. 136 (1989) 101-108.

Mit der Erfindung wird eine elektrochemische Meßzelle zum Nachweis nicht nur von Blausäure, sondern auch von Schwefeldioxid verwirklicht, weil der zugesetzte Kupferkatalysator wegen der vorliegenden Kettenreaktion im Elektrolyten einen Selektivitätsgewinn hinsichtlich des Blausäure- und des Schwefeldioxidnachweises bietet. Zusätzlich wird die Nachweisempfindlichkeit für die Substanzen HCN und $SO_2$ sowie die Vergiftungsfestigkeit der Meßzelle erhöht, da nunmehr die gesamte Zweiphasengrenze Elektrolyt/Gas in der Lage ist, die nachzuweisende Substanz aufzufangen und der Messung zugänglich zu machen, und nicht mehr lediglich die Dreiphasengrenze Elektrode/Elektrolyt/Gas.

Die Auswahl von geeignetem Elektrodenmaterial, Elektrolyt und Kupfersalz richtet sich nach der fachmännischen Kenntnis über die elektrochemische Verträglichkeit der Bestandteile untereinander und nach den Meßanforderungen. Eine besonders geeignete Zusammensetzung für den Elektrolyten ist darin zu sehen, daß Schwefelsäure mit einem Zusatz von Kupfer(II)Sulfat gewählt wird. Ein weiterer geeigneter Elekrolyt ist Calciumnitrat mit einem Zusatz an Kupfernitrat. Wird Schwefelsäure als Elektrolyt gewählt, hat man den Vorteil, daß noch störende Folgeprodukte, die sich aus gelöstem HCN bilden können, durch Hydrolyse bzw. Protonierung unschädlich gemacht werden können.

Eine besonders günstige Zusammensetzung des Elektrolyten besteht darin, daß in einer 4 M Schwefelsäure ein Zusatz von vorzugsweise $10^{-2}$ M Kupfersulfat zugefügt ist. Vorteilhafte Konzentrationsbereiche des Kupfersulfats erstrecken sich von $10^{-1}$ bis $10^{-3}$ M.

In zweckmäßiger Weise ist eine zusätzliche Referenzelektrode aus Gold vorgesehen.

Von besonderem Vorteil ist, die Meßzelle bei einer Elektrodenspannung von Null Volt betreiben zu können. Der Betrieb bei O V ermöglicht eine Lagerung der Meßzelle im Kurzschlußbetrieb, so daß sie bei Bedarf sofort in die Betriebsbereitschaft überführt werden kann. Der Grundstrom wird dabei noch weiter verringert und seine Abhängigkeit von der Umgebungstemperatur ist gleichzeitig kompensiert.

Ein Ausführungsbeispiel der Erfindung wird anhand einer schematischen Zeichnung dargestellt und im folgenden näher erläutert.

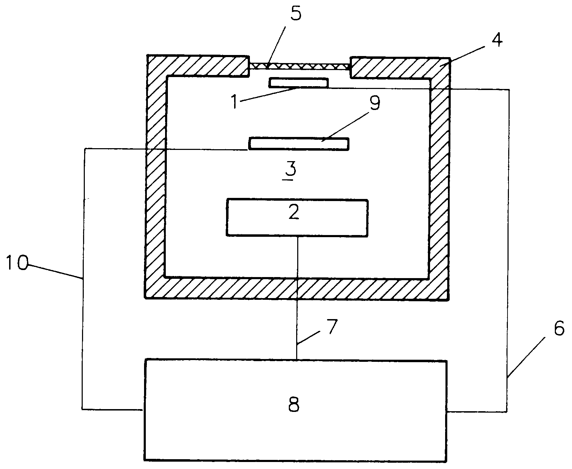

Die einzige Figur zeigt eine Meßzelle mit einer Meßelektrode (1), einer Gegenelektrode (2) und einer Bezugselektrode (9), alle aus Gold, welche in einem Elektrolytraum (3) des Meßzellengehäuses (4) eingebracht sind. Der Elektrolytraum (3) ist mit einer wäßrigen Lösung von 4 M Schwefelsäure mit einem Zusatz von $10^{-2}$ M Kupfersulfat gefüllt. Zur Umgebung hin, die die Meßprobe mit Blausäure oder Schwefeldioxid enthält, ist der Elektrolytraum (3) durch eine für Blausäure oder Schwefeldioxid permeablen Membran (5) abgeschlossen. Die Meßelektrode (1), die Gegenelektrode (2) und die Bezugselektrode (9) besitzen Meßanschlüsse (6, 7, 10), welche durch das Gehäuse (4) hindurchgeführt und an eine Auswerteeinheit (8) zur weiteren Verarbeitung der Meßsignale angeschlossen sind.

**Patentansprüche**

1. Elektrochemische Meßzelle zum Nachweis von Blausäure oder Schwefeldioxid mittels mindestens einer Meßelektrode (1) und einer Gegenelektrode (2), die in einer Meßkammer aufgenommen sind, welche zur Umgebung hin mit einer für die nachzuweisende Substanz permeablen Membran (5) abgeschlossen ist und welche mit einem Elektrolyten gefüllt ist, der einen die Oxidation der nachzuweisenden Substanz katalysierenden Zusatz an Kupfersalzen enthält, dadurch gekennzeichnet, daß sowohl die Meßelektrode (1) als auch die Gegenelektrode (2) aus Gold bestehen.

2. Elektrochemische Meßzelle nach Anspruch 1, dadurch gekennzeichnet, daß der Zusatz Kupfer(II)Sulfat, und der Elektrolyt wäßrige Schwefelsäure ist.

3. Elektrochemische Meßzelle nach Anspruch 2, dadurch gekennzeichnet, daß in einer 4 M Schwefelsäure ein Zusatz von $10^{-1}$ bis $10^{-3}$ M, vorzugsweise $10^{-2}$ M Kupfersulfat zugefügt ist.

4. Elektrochemische Meßzelle nach einem der Ansprüche 1 bis 3, dadurch gekennzeichnet, daß eine zusätzliche Referenzelektrode (9) aus Gold vorgesehen ist.

5. Elektrochemische Meßzelle nach einem der Ansprüche 1 bis 4, dadurch gekennzeichnet, daß zum Betrieb an die Elektroden (1, 2) eine Spannung von Null Volt angelegt ist.

**Claims**

1. Electrochemical measuring cell for detecting hydrocyanic acid or sulphur dioxide by means of at least one measuring electrode (1) and one counter electrode (2) which are contained in a measurement chamber, which is closed off with respect to the surroundings with a membrane (5) which is permeable for the substance to be detected and which is filled with an electrolyte, which contains an addition of copper salts that catalyses the oxidation of the substance to be detected, characterised in that both the measuring electrode (1) and the counter electrode (2) are made of gold.

2. Electrochemical measuring cell according to claim 1, characterised in that the addition is copper(II)sulphate and the electrolyte is aqueous sulphuric acid.

3. Electrochemical measuring cell according to claim 2, characterised in that an addition of $10^{-1}$ to $10^{-3}$ M, preferably $10^{-2}$ M, copper sulphate is added to a 4 M sulphuric acid.

4. Electrochemical measuring cell according to one of the claims 1 to 3, characterised in that there is provided an additional reference electrode (9) which is made of gold.

5. Electrochemical measuring cell according to one of the claims 1 to 4, characterised in that for operation a voltage of zero volts is applied to the electrodes (1, 2).

**Revendications**

1.  Cellule de mesure électrochimique destinée à la détection d'acide prussique ou de dioxyde de soufre au moyen d'au moins une électrode de mesure (1) et d'une contre-électrode (2), qui sont logées dans une chambre de mesure, qui est isolée vis-à-vis de l'atmosphère par une membrane (5) perméable à la substance à détecter et qui est remplie d'un électrolyte, qui contient un additif de sels de cuivre catalysant l'oxydation de la substance à détecter, caractérisée en ce que l'électrode de mesure (1), ainsi que la contre-électrode (2) sont en or.

2.  Cellule de mesure électrochimique selon la revendication 1, caractérisée en ce que l'additif est du sulfate de cuivre (II) et l'électrolyte est de l'acide sulfurique aqueux.

3.  Cellule de mesure électrochimique selon la revendication 2, caractérisée en ce que, dans un acide sulfurique 4M, on ajoute de $10^{-1}$ à $10^{-3}$ M, de préférence $10^{-2}$ M, de sulfate de cuivre.

4.  Cellule de mesure électrochimique selon l'une des revendications 1 à 3, caractérisée en ce qu'une électrode de référence (9) supplémentaire en or est prévue.

5.  Cellule de mesure électrochimique selon l'une des revendications 1 à 4, caractérisée en ce que, pour le fonctionnement, une tension de zéro volt est appliquée aux électrodes (1, 2).